# EUROPEAN PATENT APPLICATION

(11) **EP 2 140 749 A1**
(43) Date of publication of application: **06.01.2010**
(21) Application number: 08012157.7
(22) Date of filing: 04.07.2008
(51) Int. Cl.: A01C 1/00, G01N 21/35

(54) **Classification of seeds**

(71) Applicant: Aarhus Universitet Det Jordbrugsvidenskabelige Fakultet, 8830 Tjele (DK); Københavns Universitet, 1165 Copenhagen K (DK)
(72) Inventor: Jensen, Martin, 5792 Ãrslev (DK); Jespersen, Birthe Møller, 1956 Frederiksberg C (DK)
(74) Representative: Dragsted, Helle Rude

(57) **Abstract**

A method for the classification of a single seed according to predetermined seed quality categories, a method for providing a predictive model for classifying seeds, and a predictive model for classifying seeds is provided. The single seed may be classified according to predetermined seed quality categories, the method comprising the steps of a) obtaining an optical spectrum of the single seed comprising data in one or more selected spectral ranges and b) determining the seed quality category of the single seed by comparing at least some of the data of step a) to reference spectra obtained on a population of seeds of known seed quality.

## Description

The invention relates to a method for classification of a single seed according to predetermined seed quality categories, a method for providing a predictive model for classifying seeds, and a predictive model for classifying seeds.

### BACKGROUND

A common problem in forestry is the quality of the seeds for production of seedlings. Seeds of certain species of trees are more prone to viability problems than others. In particular, the production of Christmas trees, to a large ex-tend relying on fir tree species, such as Abies nordmanniana, often suffers from seed problems, common problems being the presence of many empty seeds, dead seeds, infected seeds, infested seeds and similar problems. In order to improve the yield seedling production it is therefore desirable to be able to easily distinguish viable from non-viable seeds at an early stage, ideally predicting the viability of each individual seed in the population.

Known methods for classifying and sorting seeds are typically based on physical properties, such as weight, size or density. These methods are, however, not selective with respect to the biological state of the seeds, such as viability, vigour, or infestation. On the other hand, methods determining the biological state of the seeds are in general destructive.

Therefore there is a need for a non-destructive method for classifying single seeds, in particular seeds of the genus Abies. Furthermore, there is a need for a method that is adapted to rapidly and reliably handle large numbers of individual seeds for classifying and/or sorting seed material on an industrial scale.

The object of the invention is thus to overcome the above-mentioned drawbacks and to provide a method for classifying single seeds, for predicting viability and/or automatically diagnosing possible seed problems, in particular with respect to seeds of the genus Abies.

### DESCRIPTION OF THE INVENTION

This and other objectives are achieved by a method according to the invention for the classification of a single seed, wherein the single seed is classified according to predetermined seed quality categories, the method comprising the steps of a) obtaining an optical spectrum of the single seed comprising data in one or more of the spectral ranges between 870 nm and 910 nm, between 920 nm and 950 nm, between 942 nm and 966 nm, and/or between 975 nm and 1015 nm, and b) determining the seed quality category of the single seed by comparing at least some of the data of step a) to reference spectra obtained for a population of seeds of known seed quality.

The reference spectra may be obtained beforehand and e.g. stored on a computer. The reference spectra should comprise data within the one or more spectral ranges. The comparison should be performed in corresponding spectral ranges. Therefore, the reference spectra should at least cover those parts of the spectral ranges that are used for determining the seed quality category by comparing spectral data obtained on the single seed to be classified with reference data.

By classifying seeds from a given lot of seeds on a single seed level, the complete lot may be characterised with respect to the quality of the seeds in terms of biological seed quality categories. The classification information may be used for sorting the seeds, i.e. for physically separating seeds of different seed quality categories. The classification information may also be used for seed quality testing, such as performed in certified seed-testing laboratories.

When classifying the seeds from a given lot, an optical spectrum may be obtained sequentially, seed by seed, for substantially each of the seeds in the lot. Optical spectra may also be obtained for a number of seeds simultaneously while keeping track of the identity of the individual seeds. The optical spectrum of each individual seed contains information about the quality of the seed and/or the biological state of the seed. The information may be retrieved by analysing the optical spectrum, and each individual seed may thus be classified based on that information.

An optical spectrum of the single seed may, in principle, be obtained in any range of the optical spectrum covering electromagnetic radiation with wavelengths ranging from ultra-violet to infra-red radiations. Preferably, the optical spectrum is obtained within the near infrared, i.e. in the range of wavelengths between 800 nm and 2500 nm, preferably between 800 nm and 1100 nm. T

The optical spectrum may be obtained over a broad spectral range of wavelengths, may comprise multiple spectral ranges or may be reduced to a single spectral component only covering a very narrow spectral range at a certain wavelength and providing a single measurement value for that narrow spectral range.

For each seed quality category, distinctive spectral features may be identified in the optical spectrum that are common to the spectra for all seeds within the category, but distinguishing with respect to at least one and ideally all of the other categories.

According to the invention, spectral ranges of particular interest for classifying seeds according to seed quality categories are comprised in the group of spectral ranges comprising the spectral range between 870 nm and 910 nm, the spectral range between 920 nm and 950 nm, the spectral range between 942 nm and 966 nm, and the spectral range between 975 nm and 1015 nm. Analysing the optical spectrum of the seed in these spectral ranges provides distinctive spectral features related to the biological state of the seed and may thus be used for the classification of the seeds into biological seed quality categories.

In practice, temperature affects the optical spectrum of a seed and should therefore preferably be controlled or at least determined when obtaining the optical spectrum. A suitable temperature range for obtaining the optical spectra is between 0°C and 35°C, preferably between 2°C and 8°C or between 15°C and 25°C. Furthermore, provisions should be taken to avoid condensation of water from the environment on the seed when taking the spectrum, since water strongly affects the optical spectrum, in particular in the infrared region.

The considerations regarding the temperature apply both when obtaining the optical spectra for building a model from the optical data of a population of reference seeds and when using the model for predicting the seed quality from the optical data of a sample seed.

The seed quality category of the single seed is determined by comparing the optical spectrum of step a) to reference data obtained on a population of seeds of known seed quality. The reference data is typically a set of reference spectra.

The term population of seeds refers here to a plurality of reference seeds comprising seeds in a number of seed quality categories. Each seed quality category may be represented by at least one reference seed. In practice, a plurality of reference seeds is provided for each seed quality category in order to ensure a sufficient statistical basis for the reference data.

By the comparison, the sample data obtained in step a) may be matched with a calibrated scale of reference data, wherein the calibration is derived from the knowledge about the seed quality of each of the reference seeds in the population. The classification procedure is thus calibrated by comparison to reference spectra, wherein the reference spectra cover a comparable spectral range, i.e. comprise the above-mentioned one or more spectral ranges with distinctive spectral features. The comparison is performed within at least the one or more spectral ranges.

An optical spectrum is taken for each of the reference seeds keeping track of the identity or at least the quality category of the reference seed. Distinguishing spectral features may be identified for each category, thereby establishing a category finger print. The classification method is calibrated by correlating each of the seed quality categories to the corresponding distinguishing spectral features. The validity range of the calibration is determined by the seed quality categories covered by reference seeds.

Further, according to one embodiment of the invention, in step b) the seed quality category is calculated from a predictive model. The predictive model takes data obtained from a sample seed to be classified as an input and from this input calculates ("predicts") the classification of the sample seed as an output. The spectral features of all seed quality categories covered by the population of reference seeds may be summarised in one predictive model.

Further, according to another embodiment of the invention, the seed quality categories comprise at least one category for seeds able to germinate and at least one category for seeds not able to germinate.

Spectral features for the distinction between seeds able to germinate and seeds not able to germinate may be found in the above-mentioned spectral ranges, in particular around 890nm, 935nm and/or 955nm. Furthermore, a broad spectral feature around 990nm may also provide information for the classification into seeds able to germinate and seeds not able to germinate.

Applying a classification scheme with categories for seeds able to germinate and seeds not able to germinate, the classification method may discriminate between seeds with respect to their viability. The categories for seeds able to germinate may comprise categories for high vigour and for low vigour.

Further, according to another embodiment of the invention, the seed quality categories for seeds not able to germinate may comprise a category for filled dead seeds, a category for insect-infested seeds, and at least one category for empty seeds.

Filled dead seeds may occur for example due to fungus-infection, bacteria-infection or simply age of the respective seeds.

Furthermore particles not able to germinate may be observed, due to impurities in the population, such as twigs, cone scales, resin particles, sand, stones or alike. Such particles not able to germinate may be identified as outliers in the optical spectra and classified as such.

Spectral features for the distinction between different categories of seeds not able to germinate may also be found in the above-mentioned one or more spectral ranges, in particular around 890 nm, 935 nm and/or 955 nm. The presence of a spectral feature alone may not be sufficient in order to identify a particular seed quality category of the seed. The level of deviation may be used in order to distinguish between different seed quality categories.

As specified in detail in the examples mentioned below, distinctive spectral features for separating different seed quality categories may be found in the following spectral ranges for moist/humidified seeds: 926-936 nm, 974-1012 nm, 890-898 nm, 902-910 nm, 914-920 nm, 876-882 nm, 914-926 nm, 908-920 nm, 892-896 nm, 860-862 nm, 930-934 nm, 1012-1014 nm, 908-922 nm, 850-868 nm, 876 nm, 986-988 nm, 850-868 nm, 918-922 nm, 892-900 nm, 940-944 nm, and 986-988 nm.

Furthermore, as specified in detail in the examples mentioned below, distinctive spectral features for separating different seed quality categories may be found in the following spectral ranges for dry seeds: 926-940 nm, 948-960 nm, 968-1010 nm, 888-902 nm, 850-858 nm, 868-878 nm, 902-910 nm, 850-860 nm, 888-896 nm, 932-934 nm, 976-1000 nm, 862-866 nm, 880-882 nm, 930-942 nm, 876-890 nm, 950-956 nm, 966-974 nm, 874 nm, 964-974 nm, 954-960 nm, 854-860 nm, 886-890 nm, 934-936 nm, 864 nm, 1048 nm, 874-878 nm, 874-876 nm, 912 nm, 904-908 nm, 980-992 nm, and 1042-1046 nm.

Overlapping spectral regions comprising distinctive spectral features for moist/humidified seeds and for dry seeds may be used for the classification of seeds more or less independent of the water content, e.g. for seeds from a lot of unspecified water content and/or having a wide spread for the water content of the individual seeds.

Further according to an embodiment of the invention, the seed is selected from the genus Abies, preferably from the group of Abies nordmanniana, Abies bornmulleriana, Abies procera, Abies alba, Abies amabilis, Abies lasiocarpa, Abies grandis, and Abies fraseri. Trees of the genus Abies are widely used for the production of Christmas trees. By classifying the seeds on a single seed level, the commonly present seed quality problems may be eliminated, thereby increasing the yield of the tree production and reducing cost of production.

Further, according to an embodiment of the invention, the seed is taken from a seed lot having an average water content between 5% and 45% by fresh weight (fresh weight based, fwb), alternatively between 7% and 15% by fresh weight, alternatively between 20% and 35% by fresh weight.

Humidity affects the optical spectrum of a seed and should therefore preferably be controlled or at least determined when obtaining the optical spectrum. Humidity of a given lot of sample or reference seeds is commonly determined on fresh-weight basis (fwb) as a seed lot average water content. The seeds are fully humidified at a saturation water content of about 40% to 45% by fresh weight. In desiccated state the water content of the seeds is down to approx. 5%-8%.

The presence of distinctive spectral features in the optical spectra of the sample seeds and of the reference seeds may depend on the water content of the seeds. Seed development, size and biochemical composition of individual seed organs or tissue influence water holding capacity of a seed and water content therefore may correlate indirectly to seed quality.

The spectra may preferably be taken on humidified seeds with a water content of between 20% and 35% by weight. In practice, it has shown that the spectra taken on humidified seeds may exhibit particularly reliable distinctive spectral features for discriminating between viable and non-viable seeds also with respect to filled, but dead seeds in the spectral range between 870 nm and 910 nm and in the range between920 nm and 950 nm.

Optical spectra taken on seeds from a dry seed lot having a water-content between 7% and 15%, may exhibit distinctive spectral features that may be used for classification of the seeds. For example, spectral features around 970 nm and in the range between 980 nm and 990 nm that are particularly pronounced in spectra taken on dry seeds may be used for the distinction between insect-infested seeds, empty seeds with thin seed coats, and empty seeds with thick seed coats.

Classifying and sorting seeds from a dry seed lot having a water content between 7% and 15% has the practical advantage that the dry seeds may be easier to handle than seeds from a lot with a high water content that may tend to stick together or give rise to erroneous data due to variations in water content between individual seeds or moisture condensing on the surface of the seeds.

Optical spectra of the humidified seeds exhibit pronounced features for identifying filled seeds that are dead, e.g. due to fungus-infection, bacteria-infection or simply age. Thereby a reliable prediction of the viability / germination potential may be achieved for the seeds from a humidified seed lot.

The considerations regarding the humidification state of the seed apply both when obtaining the optical spectra for building a model from the optical data of a population of reference seeds and when using the model for predicting the seed quality from the optical data of a sample seed.

In a further aspect of the invention, a method for providing a predictive model for the classification of seeds of at least one species selected from the genus Abies, preferably selected from the group of Abies nordmanniana, Abies bornmulleriana, Abies procera, Abies alba, Abies amabilis, Abies lasiocarpa, Abies grandis, and Abies fraseri, into seed quality categories, comprises the steps of a) providing a population of seeds of the at least one species, each of the seeds of the population being tagged with an identity, b) obtaining an optical spectrum for each seed of the population, c) performing a seed quality assessment of each seed of the population, and d) attributing one of the seed quality categories to each of the seeds and the corresponding optical spectrum of the seed according to the seed quality assessment.

As mentioned above, the population of seeds comprises seeds in a number of seed quality categories. Each seed quality category may be represented by at least one reference seed. In practice, a plurality of reference seeds is provided for each seed quality category in order to ensure a sufficient statistical basis for the calibration.

According to an embodiment of the invention, the population comprises at least ten seeds for each seed quality category, preferably more than thirty seeds for each category. Typically a population comprises a total of at least one hundred, preferably more than two hundred individual seeds, wherein each seed may be tagged with an identity for keeping track of the identity of each individual seed throughout the calibration procedure, i.e. throughout the procedure for constructing the predictive model by relating a specific seed quality category for each seed to the optical finger print of the seed.

In practice, the experimentally measured data require a pre-processing step prior to using the spectrum for the prediction of the seed quality. Typical pre-processing steps for processing the optical spectra comprise multiple scatter correction, baseline correction, removal of outliers, removal of erroneous data, filtering and/or calculating derivatives, such as the second derivative, with respect to the wavelength.

The seed quality assessment may be performed by any test allowing for identification of the biological state of the seeds. Subsequently, a seed quality category may be attributed to each of the seeds according to their respective biological state determined by the seed quality assessment, thereby classifying the seeds according to biological seed quality categories, such as the seed quality categories for seeds able to germinate and seeds not able to germinate mentioned previously.

The measurement procedures for taking optical spectra and/or assessing the seed quality may be subject to errors and artefacts. When such erroneous data are discovered, the corresponding seed or seed-like impurity may be removed from the population, thereby ensuring that the predictive model is based on reliable data. The removal of thus invalidated seeds or seed reference data may also be performed retroactively, and the predictive model may be recalculated on the basis of the corrected population, thus providing a corrected predictive model.

attributing one of the seed quality categories to each of the seeds and the corresponding optical spectrum of the seed according to the seed quality assessment

The predictive model is calibrated by correlating the seed quality categories according to the seed quality assessment with the corresponding distinctive spectral features. As explained further below, certain seed properties may lead to the observation of systematic features in the optical spectra of the seeds. The calibration of the predictive model is valid for seeds falling within the range of seed quality categories and seed properties spanned by the reference population.

The seeds comprised in the population may be further characterised by a number of seed properties describing the history of the seed, such as pre-conditioning treatment by a low-temperature treatment, humidification, drying, storage, fungicide coating, pesticide coating, and/or the state of the seed, such as the dormancy state of the seed, water content, and the like.

The pre-conditioning treatment will affect the state of the seeds and may be performed in order to bring the seeds in a well-defined state for performing a reliable classification according to seed quality.

Generally speaking, the seed properties may have a significant influence on the spectra obtained on both reference seeds and sample seeds. This may affect the reliability of the classification due to a spread in the input propagating through the predictive model to a spread in the prediction output of the model. However, systematic deviations due to a controlled variation in the seed properties may also be included in the seed quality assessment as a possible quality category, thereby also allowing for calibration of the model to distinguish different seed properties, such as water content or the size of the seed.

A very prominent influence of certain seed properties may in certain parts of the optical spectrum mask the effect of the seed quality category of interest, typically whether the seed will germinate or not. This may be dealt with by including other spectral ranges in the reference data forming the basis of the predictive model. Alternatively, the seeds may first be sorted according to the seed property behind the prominent spectral feature and, subsequently, a second calibration may be used based on a population of seeds all having the same seed property.

In practice, contaminants may be present in the population of seeds, such as seeds from another species/genus or any kind of impurity particles. The resulting artefacts may also be corrected by removing the contaminants from the population after they have been identified as outliers based on their optical spectrum or in the quality assessment.

It should also be noted that the above-mentioned considerations regarding controlling the temperature and condensation when obtaining optical spectra also apply when building a model from the optical data of a population of seeds.

Further, according to one embodiment of the invention the predictive model is based on a linear regression model, the method comprising the further steps of e) equating a numeric seed quality score representing the attributed seed quality category to a linear combination of spectral components of the optical spectrum of the seed for each seed of the population, each spectral component being weighted by a coefficient, and f) determining the regression coefficients of the linear regression model from a statistical analysis of the coefficients.

In the linear regression model, a numerical seed quality score indicative of the seed quality category for each of the seeds in the population may be calculated as a linear combination of spectral components, i.e. an optical level at a plurality of measurement points of the optical spectrum, each of the spectral components being weighted using regression coefficients.

The regression coefficients are determined from a statistical analysis of the optical spectra of substantially all seeds in the population.

The linear model may be formulated as Y = BX, where Y is the seed quality score, X represents the spectral components forming the optical spectrum of a seed and B represents the regression coefficients.

The predictive model constitutes an approximation of the information of the distinctive spectral features of all seed quality categories within the range of the model. The information, and thus the calibration, is coded in the regression coefficients. The regression coefficients are obtained from a statistical analysis of the reference spectra, such as from a partial least square (PLS) analysis.

Applying the set of regression coefficients to a first input spectrum of a first seed with a first set of distinctive spectral features gives a first output value. Applying the same set of regression coefficients to a second input spectrum of a second seed with a second set of distinctive spectral features different from the first set of spectral features will give a second output value, thereby predicting a different seed quality category for the first and the second seed.

Since the distinctive features may be attributed to different seed quality categories, the predictive model may thus distinguish between seeds of different quality.

In practice, noise may lead to variations between spectra of different seeds of the same seed quality category. The noise may contribute to a spread in the output value of the predictive model for seeds of the same category. These variations may be accounted for by a noise term E: Y = BX + E.

Further according to an embodiment of the invention, the regression coefficients for the linear regression model are determined using multivariate statistical analysis, such as PLS-analysis.

Multivariate statistical analysis is particularly suited for handling the large number of correlated reference data in order to consolidate the information about the distinctive features contained in the large number of input variables in a set of regression coefficients, thereby calibrating the linear model.

In practice, it has been found, that PLS-analysis produces reliable coefficients for the calibration of the linear model. However, other calibration techniques may be applied as well. Further examples of multivariate statistical analysis suited for providing a calibration are multi-linear regression or decomposition techniques, such as PCA, for reducing the number of variables by decomposing the reference data into a number of independent variables and/or approximating that reference data by a linear combination of the independent variables using regression coefficients.

Further, according to the invention the optical spectrum may be an absorbance spectrum calculated on the basis of a recorded transmittance. The information contained in the optical spectrum depends on where the interaction between radiation and matter has occurred.

Absorbance is measured in a transmission configuration A(λ) = -log₁₀(I/I₀), where λ is the wavelength, I₀ the intensity of the incoming radiation and I the intensity of the detected radiation. By measuring the optical spectrum in a transmission configuration, the radiation also probes the interior of the seed where meaningful information on the viability and/or the biological state of the seed is to be found.

In principle, measurements using reflection geometry may also be contemplated. In practice, the contribution of the reflected light from surface layers of the seed tends to dominate the reflectance spectra, thereby making a reliable classification more difficult.

Further, according to an embodiment of the invention, the optical spectra of step b) comprise data in at least one of the spectral ranges between 870 nm and 910 nm, between 920 nm and 950 nm, between 942 nm and 966 nm, and/or between 975 nm and 1015 nm. This group of spectral ranges comprises spectral ranges exhibiting spectral features of particular interest for classifying seeds according to seed quality categories. Analysing the optical spectrum of the seed in these spectral ranges with respect to the distinctive spectral features may thus be used for the classification of the seeds into biological seed quality categories.

Further, according to an embodiment of the invention, the seed quality assessment comprises a germination test.

By sprouting the seed in a germination test, the germination capacity of the seed may be determined. As a minimum, the seed quality assessment may distinguish between germinating and non-germinating seeds.

As mentioned above, the information from the seed quality assessment may be introduced into the predictive model by attributing one of the seed quality categories to each of the seeds and the corresponding optical spectrum of the seed according to the seed quality assessment. According to the germination test, seed quality categories for e.g. seeds able to germinate and seeds not able to germinate, may thus be attributed to the seeds and their corresponding optical spectrum.

For the germinating seeds, the seed quality assessment may yield more detailed information on the level of vigour, e.g. by distinguishing between high vigour seeds and low vigour seeds. The level of vigour may be determined by measuring the length of the root emanating from the germinating seed after a given period of time.

Further, according to an embodiment of the invention, the seed quality assessment discriminates between germinating and non-germinating seeds.

Further according to one embodiment of the invention, the seed quality assessment comprises an analysis of non-germinating seeds with respect to their biological state, such as empty seeds, filled dead seeds, insect-infested seeds, and/or empty seeds.

An analysis of non-germinating seeds with respect to their biological state reveals the reasons why the seeds do not germinate. Some of the reasons why they do not germinate in e.g. a germination test are that the seed in question is dead, empty, or infected by a plant disease or that the dormancy has not been broken.

Further analysis in order to assess the seed quality of non-germinated seeds may be performed by dissection or X-ray imaging followed by a human or computer-programmed judgement in order to establish a diagnosis.

Once a diagnosis of the principal reason why a seed did not germinate is established, the seed can be classified in the respective biological seed quality category, such as "filled, but dead", "infested", "infected", "empty", or the like.

Further analysis of the non-germinating seeds and a classification according to that further analysis have the advantage that the predictive model may be calibrated for more detailed seed quality prediction. The predictive model may thus provide an output with more detailed information about the seed that may e.g. be used in subsequent decision making in order to act upon the diagnosis, for example by initiating a treatment against a diagnosed infestation/infection.

In a further aspect of the invention a predictive model is provided by a method as defined above. The predictive model may be implemented as a mathematical formula, such as a model for calculating a seed quality score indicative of the seed quality category, wherein the calibration information is comprised in a set of calibration parameters. In the case of a linear regression model, the calibration parameters are the regression coefficients.

The predictive model may further include a decision-making step for classifying the seed based on the calculated seed quality score, thereby classifying the seed and predicting the biological state of the seed. The decision-making step may comprise criteria for discriminating between different categories, wherein a criterion may be formulated as a range or a threshold for the score value.

In a further aspect of the invention the above defined predictive model is used for classifying and/or sorting seeds of at least one of the species selected from the genus Abies, preferably from the group of Abies nordmanniana, Abies bornmulleriana, Abies procera, Abies alba, Abies amabilis, Abies lasiocarpa, Abies grandis, and Abies fraseri, wherein for each seed an optical spectrum is obtained and the seed quality category is predicted by applying the predictive model to at least parts of the optical spectrum of the seed.

Above, validity of the predictive model is defined to cover seeds of at least one species of the genus Abies. The predictive model may readily be applied to seeds of the same species covered by the predictive model.

Using a predictive model for classification has the advantage that the seed quality category may be calculated directly from the optical spectrum of the seed to be classified.

The classification may be carried out by determining if the spectral features of an optical spectrum from a sample seed to be classified, agrees with the spectral features of the reference data within predetermined tolerances. Criteria for stating "coincidence" with a given seed quality category may be established in a step by specifying the tolerances.

The prediction may comprise calculating a seed quality score and may further comprise determining whether the seed quality score falls within a given range or a threshold corresponding to a given seed quality category, thereby classifying the seed.

Furthermore, the seeds of a given lot of sample seeds may be sorted according to the classification of each individual seed.

The invention is now explained exemplarily with reference to the drawings. The drawings show in
Fig. 1 schematically, a classification method according to one embodiment of the invention,
Fig. 2 schematically, a method for providing a predictive model according to one embodiment of the invention,
Fig. 3 optical reference spectra obtained on a population of Abies nordmanniana seeds with a water content of 12% by weight, wherein spectra of the same quality category are averaged together: a) germinating seeds, b) filled dead seeds, c) insect-infested seeds, d) empty seeds with thin seed coats, e) empty seeds with thick seed coats,
Fig. 4 optical reference spectra obtained on a population of Abies nordmanniana seeds with a water content of 32% by weight, wherein spectra of the same quality category are averaged together: a) germinating seeds, b) filled dead seeds, c) insect-infested seeds, d) empty seeds with thin seed coats, e) empty seeds with thick seed coats,
Fig. 5 the difference between the spectra of Fig. 3a and Fig. 3b (thin line) and the difference between the spectra of Fig. 3a and Fig. 3e (thick line),
Fig. 6 the difference between the spectra of Fig. 4a and Fig. 4b (thin line) and the difference between the spectra of Fig. 4a and Fig. 4e (thick line), and
Fig. 7 the difference between the spectra of Fig. 3c and Fig. 3d (crosses, thin line) and the difference between the spectra of Fig. 3d and Fig. 3e (dots, thick line).

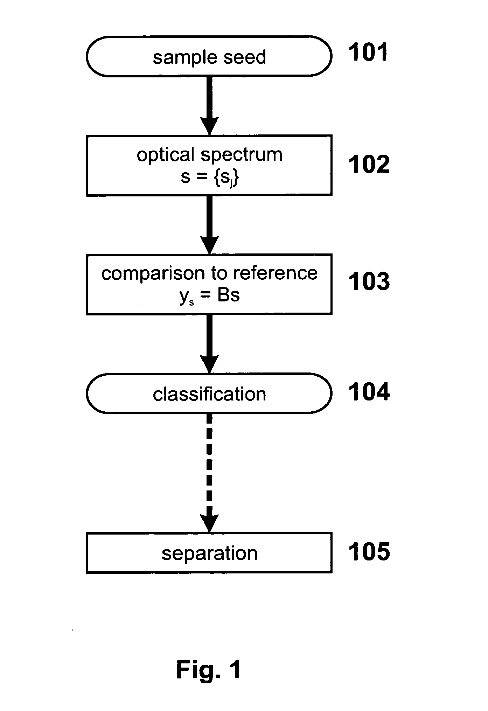

In Fig. 1, a flow chart schematically shows the procedure for the classification of a sample seed using a method according to one embodiment of the invention. In a first step 101, a sample seed is provided. The sample seed may be taken from a given lot of sample seeds, wherein a number of properties of the sample seeds are known and/or controlled beforehand. Such sample properties associated with the sample seed may comprise humidity of the lot; a storage history, e.g. providing information on how long, at what temperatures and at what humidity level the sample seed has been stored; other pre-treatment information, such as fungicide or pesticide coating; the dormancy state of the seed; the species of the seed; or the like.

In a second step 102, an optical spectrum s of the sample seed provided in the first step 101 is obtained. The optical spectrum s consists of a set of spectral components sⱼ, wherein each spectral component represents an optical level at a given frequency/wavelength. The optical levels may be obtained by a measurement and, in practice, typically a subsequent data processing in order to remove noise and artefacts from the measurement and to enhance features present in the optical spectrum. Preferably, the measurement is an absorbance measurement, but any other optical and/or spectroscopic measurement technique may be suitable. Noise and artefacts in the optical spectrum may be removed by filtering, multiple scatter correction, removal of outliers, baseline correction, or the like. The spectral data may also be processed further, e.g. by calculating derivatives of the measured and filtered/corrected data, thereby obtaining an optical spectrum s characteristic for the sample seed, wherein the optical levels of the spectral components sⱼ are represented by the second derivative values of the measured data.

In a further step 103, the optical spectrum s obtained in step 102 is then compared to reference data. The reference data may be previously obtained on a population of reference seeds and stored on a computer. The reference information may e.g. be formulated as a coefficient matrix B in a predictive model, wherein the predictive model takes the spectrum s as an input and calculates/predicts a seed quality score yₛ as an output. The comparison is thus performed by applying the predictive model to the optical spectrum s of the sample seed. The predictive model may be a linear model.

The seed quality score calculated in step 103 may be directly used as a classification parameter and/or compared to predetermined ranges and/or thresholds for determining a seed quality category for the sample seed in a further step 104. In a further step 105, the classification may be used for sorting the sample seeds of the sample lot according to seed quality by separating the seeds of different seed quality categories from each other.

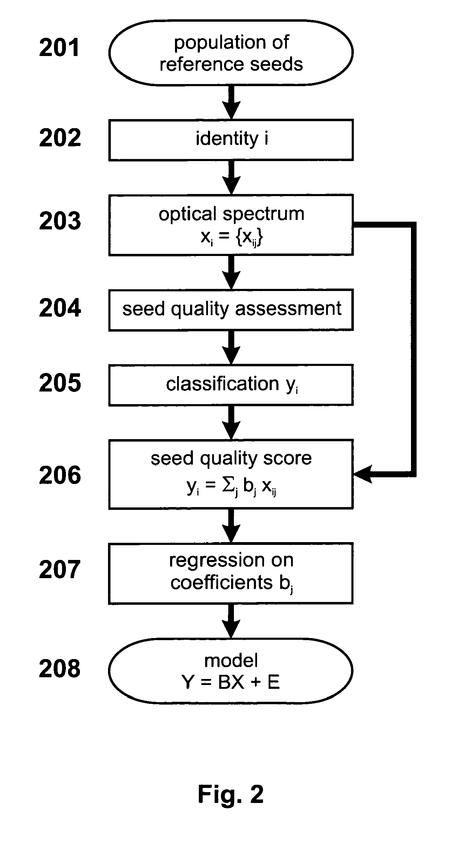

The flow chart in Fig. 2 schematically shows the procedure to be followed when applying a method for providing a predictive model according to one embodiment of the invention.

In a first step 201, a population of reference seeds is provided. The properties of the reference seeds are known and/or controlled. The properties may comprise information on the water content, storage history, other pre-treatment information, the dormancy state of the seed, taxonomic information on the seed or the like.

In steps 202 and 203, each reference seed in the reference population is tagged with an identity i, and an optical spectrum xᵢ having spectral components xᵢⱼ is taken for each of the identified reference seeds. Keeping track of the identity of the reference seeds, each reference seed of the population is furthermore subjected to a seed quality assessment 204 for determining the quality of the reference seed from a biological point of view. Based on the result of the seed quality assessment 204, the reference seeds are classified according to their seed quality, and the classification information for each reference seed is tied to the corresponding optical spectrum of that reference seed.

The classification may be expressed as a seed quality score 206 representative of the seed quality category, wherein the correlation between the optical spectrum xᵢ of the reference seed with the identity i is expressed as a linear combination of the spectral components xᵢⱼ with weighting coefficients bⱼ: yᵢ = Σⱼ bⱼ xᵢⱼ.

Since the spectral components xᵢⱼ and the seed quality score yᵢ for all reference seeds in the population are known from previous steps 203, 204, a common set of weighting coefficients bⱼ may be obtained in a regression step 207 and a predictive model Y = BX + E may be formulated, where Y is the set of seed quality scores for the population of reference seeds, B is the set of common regression coefficients bᵢⱼ, X is the set of optical spectra of the reference seeds, and E is an optional error term describing noise.

A suitable regression technique for determining the coefficients bᵢⱼ may be based on a PLS- analysis of the spectra. In order to improve the validity of the predictive model, the data obtained in steps 203-205 may be checked for outliers and/or systematic errors. The seeds and/or seed-like particles at the origin of such erroneous data may be removed from the population and thus not be taken into account when determining the regression coefficients of the predictive model.

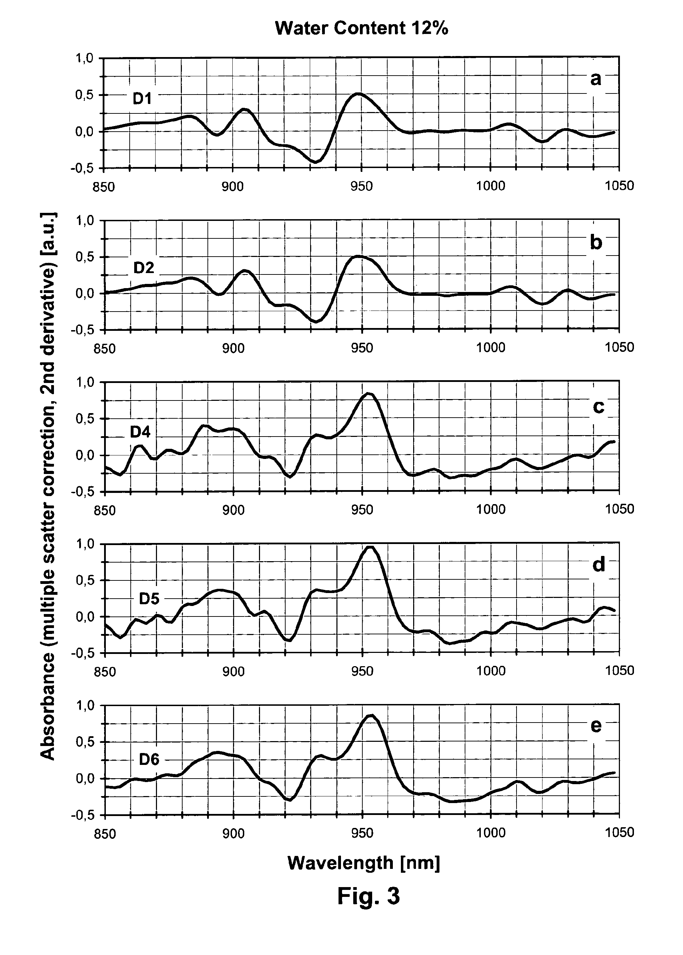

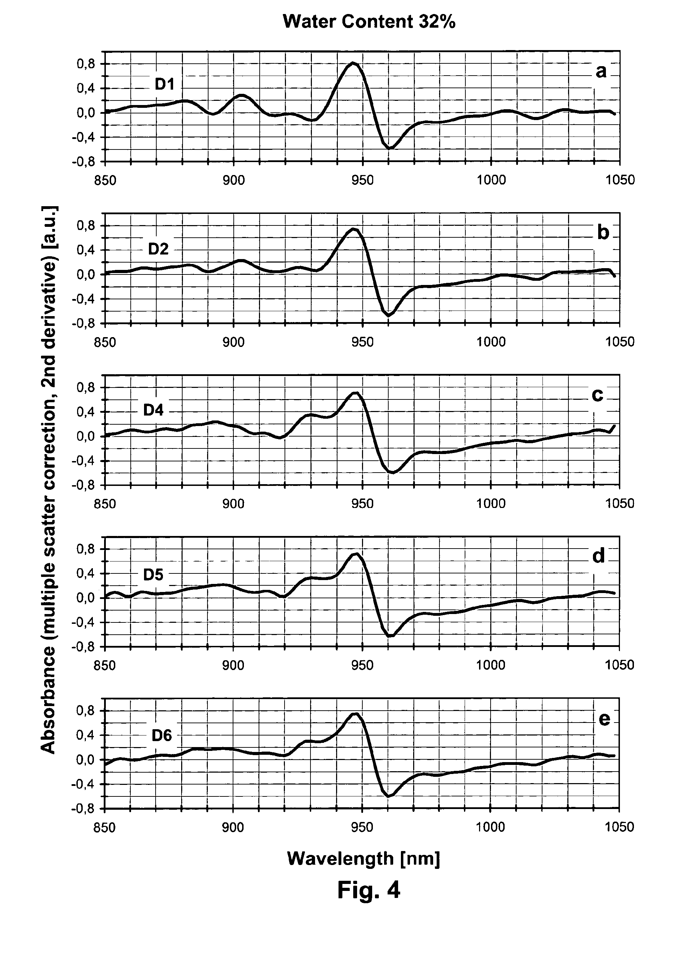

Fig. 3 and Fig. 4 show a set of optical reference spectra obtained on a population of Abies nordmanniana seeds with a water content of 12% by weight and 32% by weight, respectively. Spectra of the same quality category are averaged together. The examples shown in Fig. 3 and Fig. 4 represent data from a seed lot from the Caucasus mountains of the provenance Ambrolauri, Tlugi, Georgia.

Each point on the graph represents a spectral component, wherein the abscissa gives the wavelength of the spectral component in nm and the ordinate gives the level of the spectral component in arbitrary units (a.u.), the scale of the arbitrary units being the same for all graphs.

The representation of the spectra shown in Fig. 3 and Fig. 4 shows levels that are calculated as the second derivative with respect to the wavelength of multiple scatter corrected and baseline corrected absorbance spectra.

In both figures, the average spectra shown correspond to the seed quality categories for a) germinating seeds (D1), b) filled dead seeds (D2), c) insect-infested seeds (D4), d) empty seeds with thin seed coats (D5), and e) empty seeds with thick seed coats (D6).

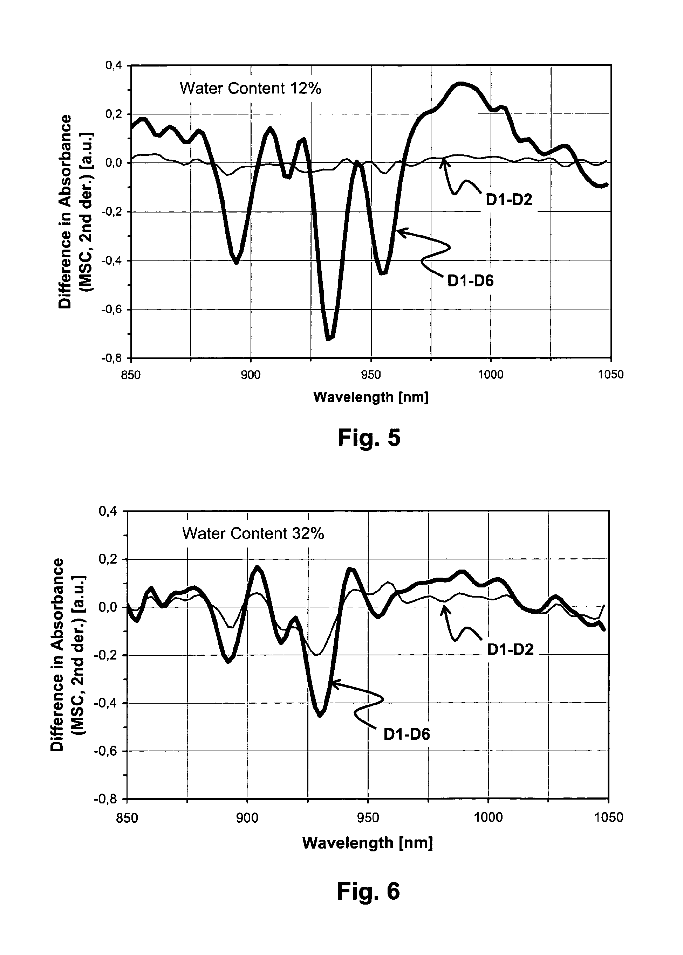

Any differences between the spectra may be used as a distinctive spectral feature. Particularly distinctive features may be found at about 890 nm, 935 nm, 955 nm, and 990 nm. Differences become more evident by subtracting the corresponding spectra from each other as illustrated in Fig. 5, Fig. 6, and Fig. 7.

Table 1 in the following gives an over view over spectral regions of interest comprising distinctive spectral features allowing for the separation of at least two of the above-mentioned seed quality categories (D1, D2, D4, D5, D6) from each other.

**Table 1: Spectral regions comprising distinctive spectral features**

| Water content 32% fwb | | |
|---|---|---|
| Spectral region of interest [nm] | for separating category | from categories |
| 926-936, 974-1012, 890-898, 902-910, 914-920, 876-882 | D1 | D2, D4, D5, D6 |
| 926-936, 974-1012, 890-898, 902-910, 914-926 | D2 | D1, D4, D5, D6 |
| 926-936, 974-1012, 890-898, 902-910 | D4 | D1, D2 |
| 908-920, 892-896, 860-862, 930-934, 1012-1014 | D4 | D5 |
| 908-922, 850-868, 892-896, 876, 930-936, 986-988 | D4 | D6 |
| 926-936, 974-1012, 890-898, 902-910, 914-920, 876-882 | D5 | D1, D2 |
| 908-920, 892-896, 860-862, 930-934, 1012-1014 | D5 | D4 |
| 850-868, 918-922, 892-900, 940-944, 986-988 | D5 | D6 |

| Water content 12% fwb | | |
|---|---|---|
| Spectral region of interest [nm] | for separating category | from categories |
| 920-926, 850-860, 888-896, 932-934, 976-1000 | D1 | D2 |
| 926-940, 948-960, 968-1010, 888-902, 850-858, 868-878, 902-910 | D1 | D4, D5, D6 |
| 926-940, 948-960, 968-1010, 888-902, 850-858, 868-878, 902-910 | D2 | D4, D5, D6 |
| 862-866, 880-882, 930-942, 876-890, 950-956, 966-974, 874 | D4 | D5 |
| 964-974, 954-960, 854-860, 886-890, 934-936, 864, 1048 | D4 | D6 |
| 950-956, 854-860, 874-878, 930-942, 874-876, 912, 904-908, 980-992, 1042-1046 | D5 | D6 |

Fig. 5 gives two examples of differences between spectra of Fig. 3 obtained at a water content of the seeds of 12% by weight. The difference spectra shown lin Fig. 5 may be used for discriminating between two different seed quality categories. The first example of Fig. 5 shows the differences between the average spectra for germinating seeds with respect to empty seeds with thick seed coats (D1-D6, thick line) exhibiting particularly distinctive spectral features at the above-mentioned wavelengths. Fig. 5 furthermore shows the differences between the average spectra for germinating seeds with respect to filled dead seeds (D1-D2, thin line), showing that the average spectrum for germinating seeds D1 also differs from the spectrum for filled dead seeds D2. However, at a water content of 12%, the distinctive spectral features for discriminating between these seed quality categories D1 and D2 are considerably less pronounced than for distinguishing between the seed quality categories D1 and D6.

Accordingly, Fig. 6 shows the differences between spectra of Fig. 4 obtained at a water content of 32% allowing to discriminate between seed quality categories D1 and D6 (D1-D6, thick line) and between seed quality categories D1 and D2 (D1-D2, thin line). The seed quality categories D1 and D6 can easily be distinguished by distinctive spectral features at about 890 nm, 935 nm, and 990 nm. The seed quality categories D1 and D2 exhibit particularly pronounced distinctive spectral features at about 890 nm, 935 nm, and 960 nm.

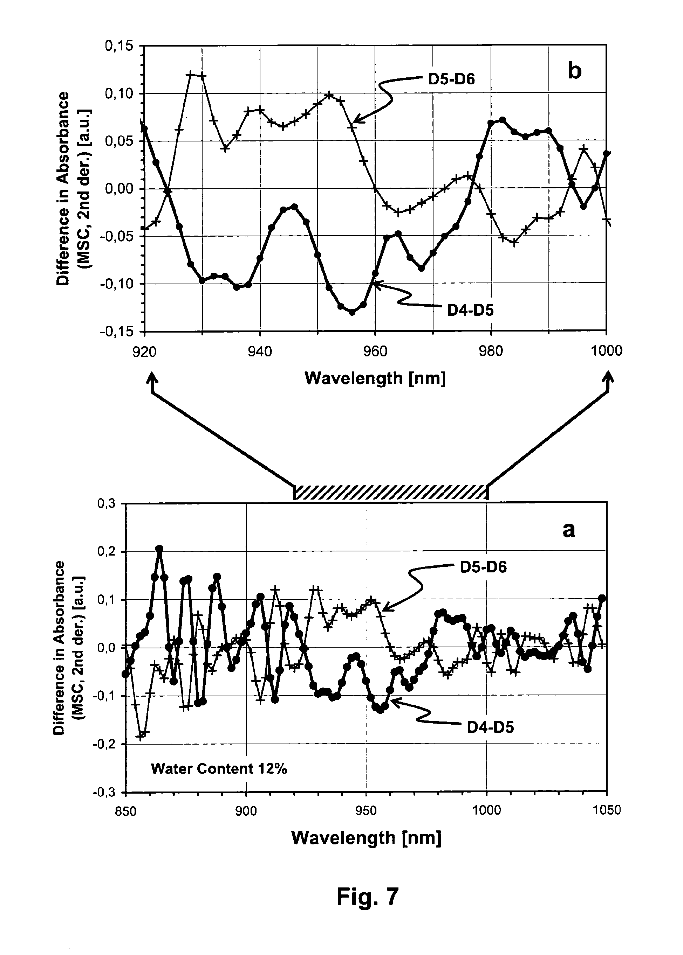

Fig. 7 shows distinctive spectral features for optical spectra of Fig. 3 (obtained at a water content of 12%). The distinctive features allow for distinguishing between seeds of the seed quality categories D4, D5 and D6. Graph a) shows the differences between spectra for seed quality categories D4 and D5 (D4-D5, dots, thick line) and for seed quality categories D5 and D6 (D5-D6, crosses, thin line). Graph b) shows an enlargement of the spectral range between 925 nm and 1000 nm comprising particularly distinctive features at 930 nm, 940 nm and 950 nm for discriminating between seed quality categories D5 and D6 and at 935 nm, 955 nm, 980 nm and 990 nm for the distinction between seed quality categories4 and D5.

It should be noted that the spectra shown in Fig. 3-Fig. 7 are examples illustrating the presence of distinctive spectral features of particular interest allowing for the distinction between seed quality categories of biological relevance. The examples illustrate that distinctive spectral features of particular relevance for the biological state of seeds exist in the optical spectra of the seeds, thereby forming the basis for providing and applying a predictive model for the classification of seeds according to the invention. The scope of the invention is, however, by no means to be understood as being limited to the above-mentioned spectral features and/or seed quality categories only.

## Claims

1. Method for classification of a single seed according to predetermined seed quality categories, the method comprising the steps of
a) obtaining an optical spectrum of the single seed comprising data in one or more of the spectral ranges between 870 nm and 910 nm, between 920 nm and 950 nm, between 942 nm and 966 nm, and/or between 975 nm and 1015 nm,
b) determining the seed quality category of the single seed by comparing at least some of the data of step a) to reference spectra obtained for a population of seeds of known seed quality.

2. Method according to claim 1, wherein in step b) the seed quality category is calculated from a predictive model.

3. Method according to any of the preceding claims, the seed quality categories comprising at least one category for germinating seeds and at least one category for non-germinating seeds.

4. Method according to claim 3, wherein the seed quality category for non-germinating seeds comprises a category for filled dead seeds, a category for insect-infested seeds, and at least one category for empty seeds

5. Method according to any of the preceding claims, wherein the seed is selected from the genus Abies, preferably selected from the group of Abies nordmanniana, Abies bornmulleriana, Abies procera, Abies alba, Abies amabilis, Abies lasiocarpa, Abies grandis, and Abies fraseri.

6. Method according to claim 5, wherein the seed is taken from a seed lot having an average water content between 5% and 45% by fresh weight, alternatively between 7% and 15% by fresh weight, alternatively between 20% and 35% by fresh weight.

7. Method for providing a predictive model for the classification of seeds of at least one species selected from the genus Abies, preferably selected from the group of Abies nordmanniana, Abies bornmulleriana, Abies procera, Abies alba, Abies amabilis, Abies lasiocarpa, Abies grandis, and Abies fraseri, into seed quality categories, said method comprising the steps of
a) providing a population of seeds of the at least one species, each of the seeds of the population being tagged with an identity,
b) obtaining an optical spectrum for each seed of the population
c) performing a seed quality assessment of each seed of the population,
d) attributing one of the seed quality categories to each of the seeds and the corresponding optical spectrum of the seed according to the seed quality assessment,

8. Method according to claim 7, wherein the predictive model is based on a linear regression model, the method comprising the further steps of
e) for each seed of the population, equating a numeric seed quality score representing the attributed seed quality category to a linear combination of spectral components of the optical spectrum of the seed, each spectral component being weighted by a coefficient.
f) determining the regression coefficients of the linear regression model from a statistical analysis of the coefficients.

9. Method according to claim 8, wherein the regression coefficients for the linear regression model are determined using partial least square (PLS) analysis.

10. Method according to any of the claims 7 - 9, wherein the optical spectrum is an absorbance spectrum.

11. Method according to any of the claims 7 - 10, the optical spectra of step b) comprising data in at least one of the spectral ranges between 870 nm and 910 nm, between 920 nm and 950 nm, between 942 nm and 966 nm, and/or between 975 nm and 1015 nm.

12. Method according to any of the claims 7 - 11, wherein the seed quality assessment comprises a germination test.

13. Method according to any of the preceding claims 7 - 12, wherein the seed quality assessment discriminates between germinating and non-germinating seeds.

14. Method according to claim 13, wherein the seed quality assessment comprises an analysis of non-germinating seeds with respect to their biological state, such as empty seeds, filled dead seeds, insect-infested seeds, and/or empty seeds.

15. Predictive model provided by a method according to any of the claims 7 - 14.

16. Use of the predictive model as defined in claim 15 for classifying and/or sorting seeds of at least one of the species selected from the genus Abies, preferably from the group of Abies nordmanniana, Abies bornmulleriana, Abies procera, Abies alba, Abies amabilis, Abies lasiocarpa, Abies grandis, and Abies fraseri, wherein for each seed an optical spectrum is obtained and the seed quality category is predicted by applying the predictive model to at least parts of the optical spectrum of the seed.
